# EUROPEAN PATENT SPECIFICATION

(11) **EP 1 283 140 B1**
(45) Date of publication and mention of the grant of the patent: **24.05.2006**
(21) Application number: 02017609.5
(22) Date of filing: 05.08.2002
(51) Int. Cl.: B60T 13/68, B60T 13/14, B60T 8/44, B60T 8/00

(54) **Piston assembly and hydraulic brake pressure generating device including said piston assembly**
Kolbenbaugruppe und eine Vorrichtung zum Erzeugen von hydraulischen Bremsdruck mit dieser Kolbenbaugruppe
Ensemble piston et un dispositif générateur de pression hydraulique de freinage comprenant ce piston

(30) Priority: 09.08.2001 JP 2001241756
(43) Date of publication of application: 12.02.2003
(73) Proprietor: Sumitomo (Sei) Brake Systems, Inc., Hisai-shi, Mie (JP)
(72) Inventor: Hashida, Koichi, c/o SUMITOMO BRAKE SYSTEMS, INC., Hyogo (JP)
(74) Representative: Grünecker, Kinkeldey, Stockmair & Schwanhäusser Anwaltssozietät

(56) References cited:
- EP-A- 0 389 993
- EP-A- 1 078 833
- GB-A- 2 162 604
- US-A- 4 726 629
- US-A- 4 729 223
- US-A- 5 577 384

## Description

### BACKGROUND OF THE INVENTION

The present invention relates to a brake hydraulic pressure generating device according to the preamble portion of claim 1. The same corresponds to a piston assembly for a hydraulic/pneumatic system which has a piston fixed while the system is normal, and required to move only in case of a failure of the system, and relates to a brake hydraulic pressure generating device incorporating the piston assembly.

Brake hydraulic pressure generating devices widely used heretofore are of a structure in which the output of a booster for amplifying the pedal stepping force is applied to a master cylinder. With this arrangement, even if the booster fails, the master cylinder can produce a minimum brake hydraulic pressure by directly receiving the brake operating force.

In this conventional arrangement, since the amount of fluid discharged from the master cylinder directly corresponds to the pedal operating force, when any additional hydraulic pressure control device such as an antilock brake system is activated, the reactive force of the brake pedal and the stroke of the brake pedal are inevitably influenced. In a device which needs intervention of control even in a normal state, such as in brake control in cooperation with regenerative braking in an electric vehicle, so-called kickback in which the brake pedal is pushed back when stepped in is especially not preferable.

In order to solve this problem, various so-called power brakes have been proposed in which the brake pedal operating amount and the fluid amount discharged from the master cylinder do not correspond. For example, in US Patent NO. 4783965, controlled hydraulic pressure is introduced into two master cylinder fluid chambers from a controlled pressure generating unit for generating a hydraulic pressure corresponding to the brake operating force, and two pistons are fixed against the brake operating force while the controlled pressure generating unit is normal. In order that there will be no sense of difference compared with conventional brakes, the pedal stroke corresponding to the brake stepping force is given only by deformation of a spring.

Thus, even if the wheel brake pressure is controlled by e.g. an antilock system, brake pedal feeling will not change. Also, it is structured such that if the controlled pressure generating unit fails, a pressure corresponding to the brake operating force is generated in the master cylinder, so that minimum braking force is ensured. Namely, so-called push-through is achieved.

In this prior art arrangement, in a normal state, the master cylinder for push-through is kept fixed in a normal state. Thus, even if it is binding due to rusting, this fact cannot be detected. Also, there is a fear that the fact that it is always fixed may induce binding. Since binding cannot be detected as long as the controlled pressure generating portion is normal, there is a possibility that binding and failure of the controlled pressure generating unit occur simultaneously. This causes no-brake and a serious problem in view of safety.

An object of the present invention is to prevent binding of a piston which is fixed and does not move in a normal state, and make it possible to detect such binding.

### SUMMARY OF THE INVENTION

According to the present invention, there is provided a brake hydraulic pressure generating device comprising a body, a cylinder formed in the body, two pistons mounted in the cylinder, two fluid chambers formed in the cylinder, a first fluid chamber of the two fluid chambers formed between one end of a first piston and a second piston of the two pistons, a second fluid chamber of the two fluid chambers being formed so as to face the other end of the second piston, a controlled pressure generating unit for generating controlled hydraulic pressure corresponding to the brake operating force, wherein brake operating force is applied to one end of the first piston, wherein controlled hydraulic pressure is introduced from the controlled pressure generating unit into at least one of the two fluid chambers, wherein while the controlled pressure generating unit is normal, a force acting on the first piston against the brake operating force, is always above the brake operating force so as to keep the first piston in its initial position relative to the body of the brake hydraulic pressure generating device, wherein in case of a failure of the controlled pressure generating unit, the first piston is pushed in by the brake operating force to generate a brake hydraulic pressure corresponding to the brake operating force, wherein the second

piston comprises a tubular extension on the side of the first fluid chamber and the first piston having its outer periphery sealed is slidably mounted in the tubular extension to form the first fluid chamber, that the first fluid chamber communicates with the exterior through a hole radially extending through the tubular extension, that sealing portions for holding the pressure in the first fluid chamber are provided on the outer periphery of the tubular extension at both ends thereof, and that the second piston has a sealing portion having a predetermined diameter on outer periphery thereof on the side of the second fluid chamber.

According to the present invention, there is also proposed a brake hydraulic pressure generating device wherein the controlled hydraulic pressure is introduced into the second fluid chamber through a changeover valve, and that the changeover valve is adapted to open when the second piston is in its initial position and when the second piston moves in such a direction as to expand the second fluid chamber, and close as the second piston moves from the initial position in a direction to shrink the second fluid chamber.

In a preferred embodiment, the force acting on the first piston against the brake opearting force is the sum of the piston thrust by the controlled hydraulic pressure and the force of an auxiliary biasing means.

Since the piston assembly according to the present invention has a structure as described above, even though the first piston has no opportunity to move in a normal state, by the movement of the second piston, the sliding portions frequently slide, so that it is possible to prevent binding. Also, e.g. by comparing fluid pressures in the first pressure chamber and the second pressure chamber (first fluid chamber and second fluid chamber), even if binding occurs with the controlled pressure generating unit in a normal state, it is possible to detect such a trouble.

The brake hydraulic pressure generating device to which is applied the piston assembly will be described below.

### BRIEF DESCRIPTION OF THE DRAWINGS

Other features and objects of the present invention will become apparent from the following description made with reference to the accompanying drawings, in which:
Fig. 1 is a sectional view showing a first embodiment of the brake hydraulic pressure generating device using the piston assembly of this invention; and
Fig. 2 is a sectional view showing a second embodiment of the brake hydraulic pressure generating device.

### DETAILED DESCRIPTION OF THE PREFERRED EMBODIMENT

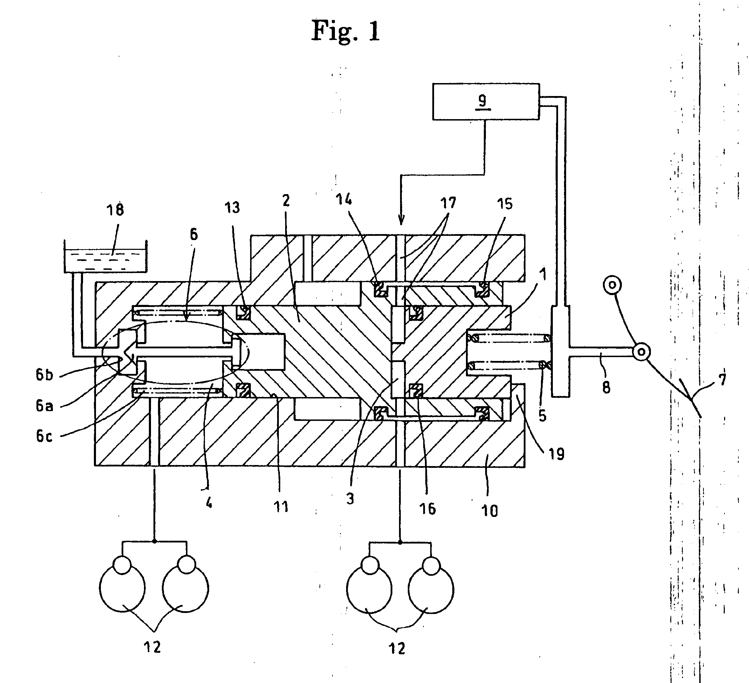

Fig. 1 shows the first embodiment of the brake hydraulic pressure generating device according to the present invention. It includes a first piston 1, a second piston 2, a first fluid chamber 3 (first pressure chamber), a second fluid chamber 4 (second pressure chamber), a first spring 5, a known center valve unit 6, a brake pedal 7, a pushrod 8, a controlled pressure generating unit 9, a body 10 formed with a cylinder 11, wheel brakes 12, and cup seals 13-16 slidable relative to the cylinder 11 for liquid-tightly sealing the outer peripheries of the pistons 1, 2.

The first piston 1 is slidably mounted in a large-diameter tubular extension at one end of the second piston 2. The first spring 5 is disposed between one end of the first piston 1 and the pushrod 8. The other end of the first piston 1 faces the first fluid chamber 3 which is defined between the first piston 1 and the second piston 2.

The second piston 2 is mounted in the stepped cylinder 11 formed in the body 10. The other end of the second piston 2 is disposed in the second fluid chamber 4, which is defined between the second piston 2 and the body 10.

The first fluid chamber 3 communicates with the controlled pressure generating unit 9 and the wheel brakes 12 in one line through holes 17 formed in the second piston 2 and the body 10. The outer periphery of the tubular extension of the second piston 2 at its both ends is sealed by the cup seals 14 and 15 to hold pressure in the first fluid chamber 3. The atmospheric pressure acts on the front and rear end faces of the extension.

Also, the second fluid chamber 4 is connected to a reservoir tank 18 through the center valve unit (changeover valve) 6. The wheel brakes 12 in the other line communicate with the second fluid chamber 4.

The center valve unit 6 is opened and closed by displacement of the second piston 2. When the second piston 2 moves in a direction to shrink the second fluid chamber 4 while compressing a spring 6c for imparting a valve-opening force, a valve body 6a is seated on a valve seat 6b to close the valve 6. On the other hand, while the second piston 2 is in its initial position (shown by solid line in Fig. 1), the valve 6 is open. Also, when the second piston 2, which has moved leftwardly in the figure, moves in a direction to expand the second fluid chamber 4, it pulls the valve body 6a to open the valve 6.

The controlled pressure generating unit 9 produces a hydraulic pressure corresponding to the brake operating force. In Fig. 1, a stopper 19 is provided to stop the first piston 1 in its initial position.

Next, the operating principle of the device of Fig. 1 will be described. The brake pedal 7 is operated with the controlled pressure generating unit 9 in a normal state. At this time, the brake operating force is transmitted through the pushrod 8 and the first spring 5 to the first piston 1. At the same time, it is also transmitted to the controlled pressure generating unit 9, which has a function similar to that of a booster in a conventional brake device.

The hydraulic pressure generated by it is set at a higher pressure than the pressure obtained by applying the brake operating force to the first piston 1. This controlled hydraulic pressure is introduced into the wheel brakes 12 in one line through the first fluid chamber 3. Since hydraulic pressure in the first fluid chamber 3 is above the pressure obtained by .applying the brake operating force to the first piston 1, the first piston is fixed in its initial position against the brake operating force. Thus, the relation between the pedal stepping force and the stroke of the brake pedal is determined solely by the property of the first spring 5, so that even if an antilock brake system (not shown) is activated, brake feeling will not be influenced.

The second piston 2 is formed such that the pressure-receiving area at the end face of the second piston 2 facing the second fluid chamber 4 is equal to the sectional area of the inner periphery of the extension of the second piston 2 forming the first fluid chamber 3. Also, the two portions liquid-tightly sealed by the cup seals 14 and 15 on the outer periphery of the extension of the second piston 2 have equal pressure-receiving areas, so that the hydraulic pressures are offset by each other. Thus, the second piston 2 moves in such a direction as to compress the second fluid chamber 4 such that the pressure in the first fluid chamber 3 and the pressure in the second fluid chamber 4 will be substantially equal to each other, thereby increasing the pressure in the second fluid chamber 4 after closing the center valve unit 6.

At this time, if either the sliding portion between the first piston 1 and the second piston 2 or that between the second piston 2 and the body 10 binds or sticks fast, the second piston 2 cannot move, so that the pressure in the second fluid chamber 4 will not rise. Thus it is possible to detect the sticking or binding e.g. by comparing the pressure in the first fluid chamber 3 with the pressure in the second fluid chamber 4.

If the controlled pressure generating unit 9 fails, the hydraulic force supporting the first piston 1 will not be produced. Thus the first piston 1 and the second piston 2 are pushed together by the brake operating force, thus generating hydraulic pressure in the second fluid chamber 4. The hydraulic fluid flows to the wheel brakes 12 in the other line, thereby ensuring minimum braking force.

As described above, since the second piston 2 moves, the sliding portion between the second piston 2 and the body 10 and the sliding portion between the second piston 2 and the first piston 1 are kept sliding even while the controlled pressure generating unit 9 is normal. Thus, the possibility of sticking is low, and it is possible to detect sticking. Thus if the controlled pressure generating unit 9 fails, it is possible to guarantee that the first and second pistons 1 and 2 are not sticking fast.

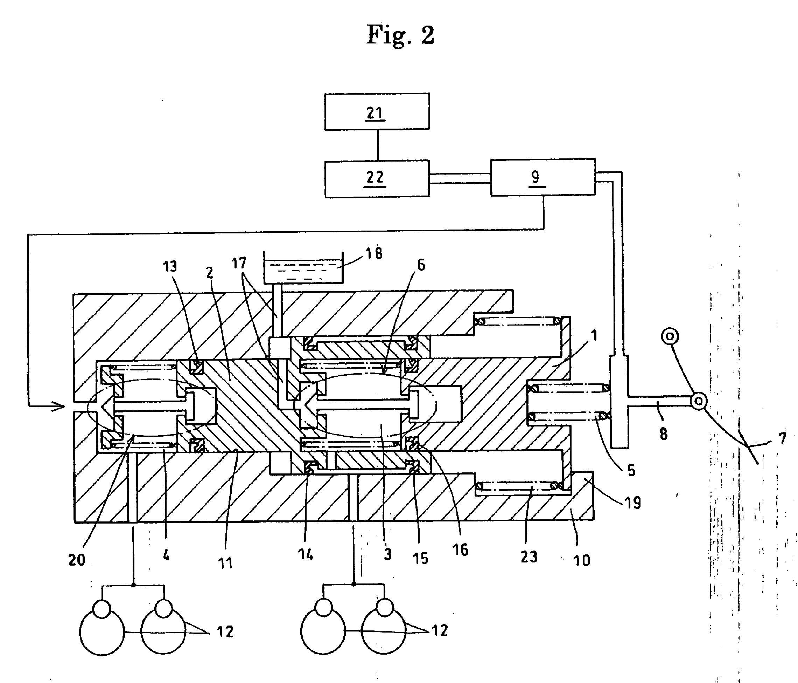

Fig. 2 shows the second embodiment of the brake hydraulic pressure generating device according to the present invention. To the same elements as those in the device of Fig. 1, the same numerals are attached. In this embodiment, the second piston 2 is provided with a center valve unit 20, and hydraulic pressure from the controlled pressure generating unit 9 is introduced into the second fluid chamber 4. The center valve unit 6 is provided between the first piston 1 and the second piston 2 and the first fluid chamber 3 is connected to the reservoir tank 18 through the center valve unit 6. Further, an electricity/force converter 22 is provided so that the controlled pressure generating unit 9 can be controlled not only by the brake operating force but also by signals from an electronic control device 21. Further, it is provided with a second spring 23 biasing the first piston 1 in the returning direction. Other structures are the same as the device of Fig. 1.

In the device of Fig. 2, hydraulic pressure from the controlled pressure generating unit 9 is introduced not into the first fluid chamber 3 but into the second fluid chamber 4. The original center valve 6 is provided on the side of the first fluid chamber 3. Even if the roles of the two fluid chambers 3 and 4 are changed in this way, while the controlled pressure generating unit 9 is normal, the pressure in the first fluid chamber 3 and the pressure in the second fluid chamber 4 are adjusted by the second piston 2 so as to be substantially equal to each other. Thus the first piston 1 is fixed in the initial position as in the device of Fig. 1. Further, as the second piston 2 moves, the sliding portions between the first and second pistons 1, 2 always slide on each other, so that the pistons are prevented from binding.

If the controlled pressure generating unit 9 fails, the first piston 1 will be pushed into the second piston 2 by the brake operating force to generate brake hydraulic pressure in the first fluid chamber 3. At this time, it is also possible to guarantee that the sliding portions are not binding, as in the device of Fig. 1. Further, because the second piston 2 is moved in a reverse direction (leftward in the figure) to the direction during a normal state by the hydraulic pressure produced in the first fluid chamber 3, and the center valve unit 20, which has been added to the second piston 2, is closed, even if the controlled pressure generating unit 9 fails, it is possible to generate hydraulic pressure in the second fluid chamber 4 that is substantially equal to the pressure in the first fluid chamber 3.

If, for regenerative braking in an electric vehicle, the electronic control device 21 controls the controlled pressure generating unit 9 through the electricity/force converter 22 such that the brake hydraulic pressure will be a pressure obtained by subtracting the pressure corresponding to the regenerative braking force from the pressure corresponding to the pedal stepping force, since the pressures in the two fluid chambers 3 and 4 are kept low, there is a fear that the hydraulic pressure for fixing the first piston 1 against the brake operating force may become short. But by setting the biasing force of the second spring 23 at a value equivalent to the amount of reduction in the hydraulic pressure at the time of generation of the regenerative braking force, it is possible to reliably fix the first piston 1 in such a case, too.

For the two-line brake system cited herein as an example of application of the piston assembly, the pressures in the two fluid chambers 3 and 4 are preferably equal to each other. Thus, description has been made that the sectional areas of the fluid chambers 3 and 4 are equal. But the application of the present invention for preventing binding of the piston assembly is not limited thereto. By intentionally making the pressure-receiving areas of the two fluid chambers different from each other, it is possible to set the pressures in the two fluid chambers in a certain proportional relation.

Also, since a two-line brake system has been cited as an example of application of the piston assembly, the second piston 2 is formed into a stepped piston and the first and second fluid chambers 3 and 4 are partitioned by the two cup seals 13 and 14 to ensure a space at the atmospheric pressure therebetween. But if the sectional area of the first fluid chamber 3 is small and it is not necessary to ensure a space at the atmospheric pressure between the fluid chambers 3 and 4, one of the cup seals 13 and 14 may be omitted and the other cup seal may be provided to separate between the fluid chambers 3 and 4.

Similarly, in the present invention, it is not an essential requirement that the two liquid-tight sealing portions of the extension of the second piston 2 by the cup seals 14,15 have the same diameter.

Also, the piston assembly of this invention can be used for a pneumatic system.

Since the piston assembly according to the present invention is of a structure as described above, even if it is used in an application in which the position of the first piston is fixed in a normal state, it is possible to prevent and detect the binding of the sliding portions, and thus to improve reliability when necessity arises to move the first piston.

The brake hydraulic pressure generating device using this piston assembly is free from a fear of no brakes due to binding of the piston in case of a failure of the controlled pressure generating unit, and a system is provided in which the brake pressure can be freely controlled without developing kickbacks to the brake pedal.

In particular, the brake hydraulic pressure generating device may be structured such that controlled hydraulic pressure is introduced into the second fluid chamber through a changeover valve, and that the changeover valve is adapted to open when the second piston is in its initial position and when the second piston moves in such a direction as to expand the second fluid chamber, and close as the second piston moves from the initial position in a direction to shrink the second fluid chamber. With this arrangement, hydraulic pressures are generated in the first and second fluid chambers communicating with wheel brakes in two lines in case of a failure of the controlled pressure generating unit. This further improves reliability.

## Claims

1. A brake hydraulic pressure generating device comprising a body (10), a cylinder (11) formed in said body (10), two pistons (1,2) mounted in said cylinder (11), two fluid chambers (3,4) formed in said cylinder (11), a first fluid chamber (3) of said two fluid chambers (3,4) formed between one end of a first piston (1) and a second piston (2) of said two pistons (1,2), a second fluid chamber (4) of said two fluid chambers (3,4) being formed so as to face the other end of said second piston (2), a controlled pressure generating unit (9) for generating controlled hydraulic pressure corresponding to the brake operating force, wherein brake operating force is applied to one end of said first piston (1), wherein controlled hydraulic pressure is introduced from said controlled pressure generating unit (9) into at least one of said two fluid chambers (3,4), wherein while said controlled pressure generating unit (9) is normal, a force acting on said first piston (1) against the brake operating force is always above the brake operating force so as to keep said first piston (1) in its initial position relative to the body (10) of said brake hydraulic pressure generating device, wherein in case of a failure of said controlled pressure generating unit (9), said first piston (1) is pushed in by the brake operating force to generate a brake hydraulic pressure corresponding to the brake operating force,
**characterized in that**
said second piston (2) comprises a tubular extension on the side of said first fluid chamber (3) and said first piston (1) having its outer periphery sealed is slidably mounted in said tubular extension to form said first fluid chamber (3), that said first fluid chamber (3) communicates with the exterior through a hole (17) radially extending through said tubular extension, that sealing portions (14,15) for holding the pressure in said first fluid chamber (3) are provided on the outer periphery of said tubular extension at both ends thereof, and that said second piston (2) has a sealing portion (13) having a predetermined diameter on outer periphery thereof on the side of said second fluid chamber (4).

2. A brake hydraulic pressure generating device as claimed in claim 1, wherein said controlled hydraulic pressure is introduced into said second fluid chamber (4) through a changeover valve (20), and that said changeover valve (20) is adapted to open when said second piston (2) is in its initial position and when said second piston (2) moves in such a direction as to expand said second fluid chamber (4), and close as said second piston (2) moves from the initial position in a direction to shrink said second fluid chamber (4).

3. A brake hydraulic pressure generating device as claimed in claim 1, wherein the force acting on the first piston against the brake operating force is the sum of the piston thrust by the controlled hydraulic pressure and the force of an auxiliary biasing means (23).

## Patentansprüche

1. Vorrichtung zum Erzeugen von Brems-Hydraulikdruck, die einen Körper (10), einen Zylinder (11), der in dem Körper (10) ausgebildet ist, zwei Kolben (1, 2), die in dem Zylinder (11) angebracht sind, zwei Fluidkammern (3, 4), die in dem Zylinder (11) ausgebildet sind, wobei eine erste Fluidkammer (3) der zwei Fluidkammern (3, 4) zwischen einem Ende eines ersten Kolbens (1) und eines zweiten Kolbens (2) der zwei Kolben (1, 2) ausgebildet ist, eine zweite Fluidkammer (4) der zwei Fluidkammern (3, 4) so ausgebildet ist, dass sie dem anderen Ende des zweiten Kolbens (2) zugewandt ist, und eine Einheit (9) zum Erzeugen von kontrolliertem Druck umfasst, die entsprechend der Bremsbetätigungskraft kontrollierten Hydraulikdruck erzeugt, wobei Bremsbetätigungskraft auf ein Ende des ersten Kolbens (1) ausgeübt wird und gesteuerter Hydraulikdruck von der Einheit (9) zum Erzeugen von kontrolliertem Druck in wenigstens eine der zwei Fluidkammern (3, 4) eingeleitet wird und, wenn sich die Einheit (9) zum Erzeugen von kontrolliertem Druck im Normalzustand befindet, eine Kraft, die gegen die Bremsbetätigungskraft auf den ersten Kolben (1) wirkt, stets über der Bremsbetätigungskraft liegt, um den ersten Kolben (1) in seiner Ausgangsposition relativ zu dem Körper (10) der Vorrichtung zum Erzeugen von Brems-Hydraulikdruck zu halten, und im Fall eines Ausfalls der Einheit (9) zum Erzeugen von kontrolliertem Druck der erste Kolben (1) durch die Bremsbetätigungskraft eingedrückt wird, um einen der Bremsbetätigungskraft entsprechenden Brems-Hydraulikdruck zu erzeugen,
**dadurch gekennzeichnet, dass**
der zweite Kolben (2) eine röhrenförmige Verlängerung an der Seite der ersten Fluidkammer (3) umfasst und der erste Kolben (1), dessen Außenumfang abgedichtet ist, verschiebbar in der röhrenförmigen Verlängerung angebracht ist, um die erste Fluidkammer (3) zu bilden, dass die erste Fluidkammer (3) mit der Außenseite über ein Loch (17) in Verbindung steht, dass sich radial durch die röhrenförmige Verlängerung hindurch erstreckt, dass Dichtungsabschnitte (14, 15), die den Druck in der ersten Fluidkammer (3) halten, an dem Außenumfang der röhrenförmigen Verlängerung an beiden Enden derselben vorhanden sind, und dass der zweite Kolben (2) einen Dichtungsabschnitt (13) mit einem vorgegebenen Durchmesser an seinem Außenumfang an der Seite der zweiten Fluidkammer (4) hat.

2. Vorrichtung zum Erzeugen von Brems-Hydraulikdruck nach Anspruch 1, wobei der gesteuerte Hydraulikdruck über ein Umschaltventil (20) in die zweite Fluidkammer (4) eingeleitet wird und das Umschaltventil (20) so eingerichtet ist, dass es sich öffnet, wenn sich der zweite Kolben (2) in seiner Ausgangsposition befindet, und wenn sich der zweite Kolben (2) in einer Richtung bewegt, in der die zweite Fluidkammer (4) vergrößert wird, und es sich schließt, wenn sich der zweite Kolben (2) aus der Ausgangsposition in einer Richtung bewegt, in der die zweite Fluidkammer (4) verkleinert wird.

3. Vorrichtung zum Erzeugen von Brems-Hydraulikdruck nach Anspruch 1, wobei die Kraft, die gegen die Bremsbetätigungskraft auf den ersten Kolben wirkt, die Summe des Kolbenschubs durch den gesteuerten Hydraulikdruck und der Kraft einer Zusatz-Spanneinrichtung (23) ist.

## Revendications

1. Dispositif générant une pression hydraulique de freinage, comprenant un corps (10), un cylindre (11) formé dans ledit corps (10), deux pistons (1, 2) montés dans ledit cylindre (11), deux chambres de liquide (3, 4) formées dans ledit cylindre (11), une première chambre de liquide (3) desdites deux chambres de liquide (3, 4) formée entre une extrémité d'un premier piston (1) et d'un second piston (2) desdits deux pistons (1, 2), une seconde chambre de liquide (4) desdites deux chambres de liquide (3, 4) étant formée de façon à être disposée en face de l'autre extrémité dudit second piston (2), une unité (9) générant une pression régulée servant à générer une pression hydraulique régulée correspondant à la force d'actionnement du frein, dispositif dans lequel une force d'actionnement du frein est appliquée au niveau d'une extrémité dudit premier piston (1), dans lequel la pression hydraulique régulée est introduite à partir de ladite unité (9) générant une pression régulée, à l'intérieur d'au moins l'une desdites deux chambres de liquide (3, 4), dans lequel, lorsque ladite unité (9) générant une pression régulée est normale, une force agissant sur ledit premier piston (1), en s'opposant à la force d'actionnement du frein, est toujours supérieure à la force de fonctionnement du frein, de façon à maintenir ledit premier piston (1) dans sa position initiale par rapport au corps (10) dudit dispositif générant une pression hydraulique de freinage, dans lequel, en cas de panne de ladite unité (9) générant une pression régulée, ledit premier piston (1) est poussé par la force d'actionnement du frein, pour générer une pression hydraulique de freinage correspondant à la force d'actionnement du frein,
**caractérisé**
**en ce que** ledit second piston (2) comprend une extension tubulaire sur le côté de ladite première chambre de liquide (3), et ledit premier piston (1) ayant sa périphérie extérieure scellée est monté de façon coulissante dans ladite extension tubulaire, pour former ladite première chambre de liquide (3),
**en ce que** ladite première chambre de liquide (3) communique avec l'extérieur par un trou (17) s'étendant radialement à travers ladite extension tubulaire,
**en ce que** des parties d'étanchéité (14, 15) servant à maintenir la pression dans ladite première chambre de liquide (3) sont prévues sur la périphérie extérieure de ladite extension tubulaire, au niveau de ses deux extrémités, et
**en ce que** ledit second piston (2) a une partie d'étanchéité (13) ayant un diamètre prédéterminé sur sa périphérie extérieure, sur le côté de ladite seconde chambre de liquide (4).

2. Dispositif générant une pression hydraulique de freinage selon la revendication 1, dans lequel ladite pression hydraulique régulée est introduite à l'intérieur de ladite seconde chambre de liquide (4), par une valve de commutation (20), et en ce que ladite valve de commutation (20) est adaptée pour s'ouvrir lorsque ledit second piston (2) est dans sa position initiale et lorsque ledit piston (2) se déplace dans une direction de façon à dilater ladite seconde chambre de fluide (4), et pour se fermer lorsque ledit second piston (2) se déplace, passant de la position initiale dans une direction pour rétracter ladite seconde chambre de liquide (4).

3. Dispositif générant une pression hydraulique de freinage selon la revendication 1, dans lequel la force agissant sur le premier piston, en s'opposant à la force d'actionnement du frein, est la somme de la poussée du piston exercée par la pression hydraulique régulée et de la force d'un moyen de sollicitation auxiliaire (23).
